# FASCICULE DE BREVET EUROPEEN

(11) **EP 4 103 921 B1**
(45) Date de publication et mention de la délivrance du brevet: **26.03.2025**
(21) Numéro de dépôt: 21701534.6
(22) Date de dépôt: 27.01.2021
(51) Int. Cl.: G01J 5/80, G01J 5/90

(54) **PROCÉDÉ DE CALIBRATION D'UN DISPOSITIF OPTOÉLECTRONIQUE**
VERFAHREN ZUM KALIBRIEREN EINER OPTO-EKTRONISCHEN VORRICHTUNG
METHOD FOR CALIBRATING AN OPTOELECTRONIC DEVICE

(30) Priorité: 10.02.2020 FR 2001265
(43) Date de publication de la demande: 21.12.2022
(73) Titulaire: Bertin Technologies, 78180 Montigny-le-Bretonneux (FR)
(72) Inventeur: SOULIE, Emmanuel, 13790 Rousset (FR); ORIOT DE LA CHAPELLE, David, 13250 Saint-Chamas (FR); DIAZ, Damien, 13480 Cabries (FR)
(74) Mandataire: Hautier IP
(86) Numéro de dépôt international: PCT/EP2021/051865
(87) Numéro de publication internationale: WO 2021/160433

(56) Documents cités:
- US-A1- 2007 029 484
- US-B1- 8 378 290
- CHENGWEI LIU ET AL: "Shutterless non-uniformity correction for the long-term stability of an uncooled long-wave infrared camera", MEASUREMENT SCIENCE AND TECHNOLOGY, IOP, BRISTOL, GB, vol. 29, no. 2, 17 January 2018 (2018-01-17), pages 25402, XP020323870, ISSN: 0957-0233, [retrieved on 20180117], DOI: 10.1088/1361-6501/AA9871
- BRADLEY M. RATLIFF ET AL: "Radiometrically accurate scene-based nonuniformity correction for array sensors", JOURNAL OF THE OPTICAL SOCIETY OF AMERICA A, vol. 20, no. 10, 1 October 2003 (2003-10-01), pages 1890 - 4280, XP055742548, ISSN: 1084-7529, DOI: 10.1364/JOSAA.20.001890

## Description

### DOMAINE TECHNIQUE DE L'INVENTION

La présente invention concerne le domaine des capteurs optiques, en particulier des capteurs optoélectroniques dans le domaine de l'imagerie infrarouge thermique. Elle trouve pour application particulièrement avantageuse le domaine de la calibration de ce type de dispositifs optoélectroniques.

### ETAT DE LA TECHNIQUE

L'imagerie infrarouge connaît un essor important grâce aux avancées de la microélectronique. La capacité à réaliser des capteurs plus sensibles et plus petits a permis cet essor.

Dans le domaine de l'imagerie infrarouge thermique, il est crucial de disposer d'une table de correspondance calibrée entre l'intensité de rayonnement perçu par le capteur et la température du corps imagé. Une des principales problématiques de ces dispositifs consiste en une dérive thermique des capteurs optoélectroniques du type bolomètres par exemple, principalement avec des capteurs conçus à base de silicium amorphe. Cette dérive implique que la calibration des capteurs soit régulièrement faite.

Cette calibration est donc généralement faite de manière cyclique avec ce que l'on appelle un élément de référence. Ainsi par exemple, un cache de température connu sous le nom de « shutter » (pour alternateur en anglais) peut être disposé à l'avant du capteur le temps que celui-ci puisse en mesurer son image infrarouge et que l'électronique ajuste les mesures avec la température du cache connu.

Ce type de solution est très efficace, mais pose une grande problématique. En effet, alors que certaines applications nécessitent une imagerie ininterrompue, cette solution implique de perdre l'image souhaitée pendant quelques instants le temps de recalibrer le capteur. Plusieurs astuces afin d'accélérer la recalibration ont été proposées, mais présentent toutes des problématiques d'utilisation sur le terrain. On connait ainsi, par exemple, le document US8378290 B1 qui décrit un procédé de calibration d'un dispositif optoélectronique.

Un objet de la présente invention est donc de proposer une solution au moins à certaines de ces problématiques.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

La présente invention concerne un procédé de calibration d'un dispositif optoélectronique selon la revendication 1.

La présente invention permet de calibrer, de préférence une seule fois, et avantageusement en usine, un dispositif optoélectronique. Elle concerne un procédé de calibration qu'il n'est pas nécessaire de reproduire sur le terrain en cours d'utilisation du dispositif optoélectronique.

La présente invention permet la détermination des paramètres de fonctionnement et leur test dans un même procédé comprenant une montée en température en escalier et une descente linéaire en température. La montée en escalier permet de disposer du temps nécessaire pour effectuer les ajustements et enregistrements de données nécessaire pour plusieurs températures, puis la descente linéaire permet de tester dans un environnement thermique dynamique la calibration du dispositif optoélectronique.

Avantageusement, le procédé comprend une phase de calibration par paliers de température, donc une phase de calibration dite statique, et une phase de vérification dite dynamique par une évolution de la température.

Avantageusement, le procédé comprend une phase de calibration discrète et une phase de vérification continue.

De préférence, la présente invention permet de calibrer le dispositif optoélectronique en fonction de son utilisation future en positionnant la gamme relativement à la plage dynamique du convertisseur de sorte à préférer soit des applications en milieux froids, chauds ou à températures ambiantes.

La présente invention permet de créer des tables de paramètres de fonctionnement et de comportement de chaque bolomètre.

La présente invention permet de se passer d'un cache ou obturateur et d'un procédé de calibration nécessaire de répéter régulièrement.

Le dispositif optoélectronique peut donc être utilisé en continu sur le terrain sans interruption de recalibration, et sans que le dispositif optoélectronique ne doive être maintenu à une température déterminée.

La présente invention concerne également un produit-programme d'ordinateur comprenant des instructions, qui lorsqu'elles sont effectuées par au moins un processeur, exécute au moins le procédé selon la présente invention. Ledit processeur est configuré pour commander une enceinte climatique dans laquelle un dispositif optoélectronique est disposé et pour commander ledit dispositif optoélectronique.

### DESCRIPTION DÉTAILLÉE DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement certaines étapes du procédé selon un mode de réalisation de la présente invention.
La figure 2 représente schématiquement une matrice de bolomètres selon un mode de réalisation de la présente invention.
La figure 3 schématiquement un dispositif optoélectronique disposé dans une enceinte climatique selon un mode de réalisation de la présente invention.
La figure 4 représente l'évolution de la température de la matrice de bolomètres lors du procédé selon un mode de réalisation de la présente invention.
La figure 5 illustre le positionnement schématique d'un dispositif optoélectronique devant un corps noir.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, la gamme présélectionnée comprend le milieu de la plage dynamique, de préférence est centrée sur le milieu de la plage dynamique, avantageusement présente une extension inférieure à 20% de part et d'autre du centre de la plage dynamique.

Cela permet de conserver la pleine dynamique de chaque bolomètre afin de de réduire, voire de ne pas souffrir de saturation, et cela aussi bien pour des températures basses que hautes.

Selon un exemple, la gamme présélectionnée comprend le niveau des 25% de la plage dynamique, de préférence est centrée sur le niveau des 25% de la plage dynamique, avantageusement présente une extension inférieure à 20% de part et d'autre du niveau des 25% de la plage dynamique.

Cela permet de conserver la pleine dynamique de chaque bolomètre dans la direction des hautes températures pour des applications dans lesquelles les températures observées sont relativement élevées.

Selon un exemple, la gamme présélectionnée comprend le niveau des 75% de la plage dynamique, de préférence est centrée sur le niveau des 75% de la plage dynamique, avantageusement présente une extension inférieure à 20% de part et d'autre du niveau des 75% de la plage dynamique.

Cela permet de conserver la pleine dynamique de chaque bolomètre dans la direction des basses températures pour des applications dans lesquelles les températures observées sont relativement basses.

Selon un exemple, si la mesure du critère de fonctionnement indique un désaccord supérieur à une valeur seuil entre la valeur de la température évaluée par la matrice de bolomètres et la température de la scène observée, de préférence de la matrice de bolomètres, la phase de calibration est exécutée de nouveau.

Cela permet de ne terminer le procédé de calibration que lorsque le dispositif optoélectronique est correctement calibré.

Selon un exemple, l'étape d'enregistrement des valeurs de tension électrique de correction est effectuée après une étape de moyennage d'un nombre prédéterminé d'images thermiques à une même température.

Cela permet d'améliorer la fiabilité de la détermination des valeurs de tension électrique de correction pour chaque bolomètre.

Selon un exemple, l'évaluation du critère de fonctionnement du dispositif optoélectronique comprend l'évaluation du bruit spatial fixe et/ou de la valeur thermique moyenne d'au moins une image.

Cela permet de quantifier le niveau de réussite de la phase de calibration.

Selon un exemple, la matrice de bolomètres présente une disposition des bolomètres en lignes et en colonnes, et l'acquisition par le circuit de lecture des signaux analogiques bruts est réalisée ligne par ligne.

Selon un exemple, le rapport entre le temps de stabilisation Tps_stab et le temps de modification de la température est supérieur à 1, de préférence à 5 et avantageusement à 10. Selon un exemple, l'étape de descente linéaire en température de Tf à T0 présente un coefficient directeur inférieur ou égal à 2°C/minute, de préférence à 1° C/minute et avantageusement à 0.5° C/minute.

Selon un exemple, le procédé comprend une phase additionnelle dans laquelle le dispositif optoélectronique est disposé de sorte à ce que l'entrée optique soit face à un corps noir, la phase additionnelle comprenant au moins les étapes successives suivantes :
a. Acquisition d'une première pluralité d'images lorsque le corps noir présente une température T3 inférieure à T0 ;
b. Acquisition d'une deuxième pluralité d'images lorsque le corps noir présente une température T4 supérieure à T0.
c. Détermination des bolomètres présentant une erreur de mesure.

On entend par « température d'un élément », la température que l'élément dégage sous forme radiative, c'est-à-dire sous la forme d'un flux électromagnétique dont la ou les longueurs d'onde se trouvent comprises dans la gamme des infrarouges.

On entend par « une température stabilisée », une température dont les fluctuations sont inférieures à 1°C, de préférence à 0.01°C, et avantageusement à 0.001°C.

Par « corps noir », on entend un élément ou dispositif dont la température est estimée stable et dont l'émissivité de la surface (notation : ε) est proche de ε=1 (ou typiquement ε>0.97).

Dans la présente description, une plage dynamique d'un convertisseur de signaux analogiques vers des signaux numériques s'étend sur plusieurs valeurs par exemple depuis 0 jusqu'à 100.

On entend alors par milieu, centre, point des 50% de la plage dynamique, la valeur 50 par exemple. De même, les 75% de la plage dynamique seront interprétés comme la valeur 75, enfin il en est de même avec le point des 25% de la plage dynamique qui correspond donc à la valeur 25. Tout cela dans le cas où la plage dynamique s'étend par exemple depuis 0 jusqu'à 100.

La présente invention concerne un procédé de calibration d'un dispositif optoélectronique. Ce dispositif optoélectronique comprend une entrée optique destinée à recevoir un flux électromagnétique, de préférence dans le domaine des infrarouges thermiques. En effet, de manière préférée, la présente invention concerne un procédé de calibration d'un dispositif optoélectronique de vision thermique destiné à visualiser le rayonnement infrarouge d'une scène, et de préférence à pouvoir évaluer la température des éléments présents dans ladite scène.

Selon un mode de réalisation, le dispositif optoélectronique comprend au moins une matrice de détecteurs infrarouge, de préférence de bolomètres et avantageusement de microbolomètres. Dans la suite de cette description, le terme bolomètre désigne aussi bien des bolomètres que des microbolomètres.

De préférence, mais non limitativement, les bolomètres de la matrice de bolomètres sont à base de silicium amorphe. Cela permet que le gain relatif entre chaque bolomètre demeure identique, quelle que soit la température de la matrice de bolomètres tant que les paramètres relatifs au gain restent constants, c'est-à-dire tant que par exemple le temps d'intégration, ou le gain électronique, etc... restent constants. Cela permet également que le comportement des bolomètres en fonction de la température soit parfaitement reproductible dans des conditions de mesures identiques.

Avantageusement, ces bolomètres sont disposés en lignes et en colonnes formant ainsi une matrice de bolomètres. Cette matrice de bolomètre est électriquement connectée à un circuit de lecture. Ce circuit de lecture est configuré pour collecter les signaux analogiques bruts de chaque bolomètre. En effet, chaque bolomètre est configuré pour générer un signal analogique brut en fonction de la radiation thermique qu'il reçoit.

Selon un mode de réalisation préféré, le circuit de lecture collecte les signaux analogiques de la matrice de bolomètres ligne par ligne, de préférence depuis une extrémité de la matrice vers son extrémité opposée.

Avantageusement, le circuit de lecture comprend une sortie analogique apte à fournir une pluralité de signaux analogiques bruts, c'est-à-dire les signaux analogiques bruts collectés ligne par ligne.

De préférence, cette sortie analogique est connectée électriquement à un convertisseur de signal analogique en signal numérique. Ce convertisseur comprend au moins une plage dynamique, généralement exprimée en bits. Ce convertisseur permet en outre la génération d'une image thermique de la scène observée par le dispositif optoélectronique.

Comme indiqué précédemment, l'art antérieur souffre de dérives thermiques nécessitant une phase de calibration régulière pour recalibrer les paramètres de fonctionnement de chaque bolomètre, cela peut comprendre en outre les tensions de polarisation appliquées à chaque bolomètre de la matrice, les tensions électriques de correction à considérer, etc... En effet, en fonction de la dérive thermique plus ou moins importante, il est important de pouvoir ajuster divers paramètres de fonctionnement des bolomètres pour conserver un signal analogique brut cohérent avec l'intensité du flux de radiations thermiques reçu.

L'art antérieur propose ainsi d'utiliser un cache dont la température est connue afin d'exposer la matrice de bolomètres à ce cache, puis d'ajuster les paramètres de fonctionnement jusqu'à obtenir une image thermique cohérente avec la température du cache disposé devant la matrice. Cela occasionne l'arrêt de l'utilisation du dispositif dans sa fonction de base, c'est-à-dire l'observation d'une scène.

La présente invention propose une solution innovante et ne nécessitant pas l'utilisation d'un cache et donc l'arrêt de l'utilisation du dispositif optoélectronique. Arrêt qui peut être désastreux dans le cas d'une utilisation de cette technologie dans un domaine militaire par exemple.

La présente invention propose un procédé de calibration, de préférence en usine, du dispositif optoélectronique. Avec cette calibration, l'utilisation d'un cache, appelé aussi obturateur ou encore shutter, n'est plus utile.

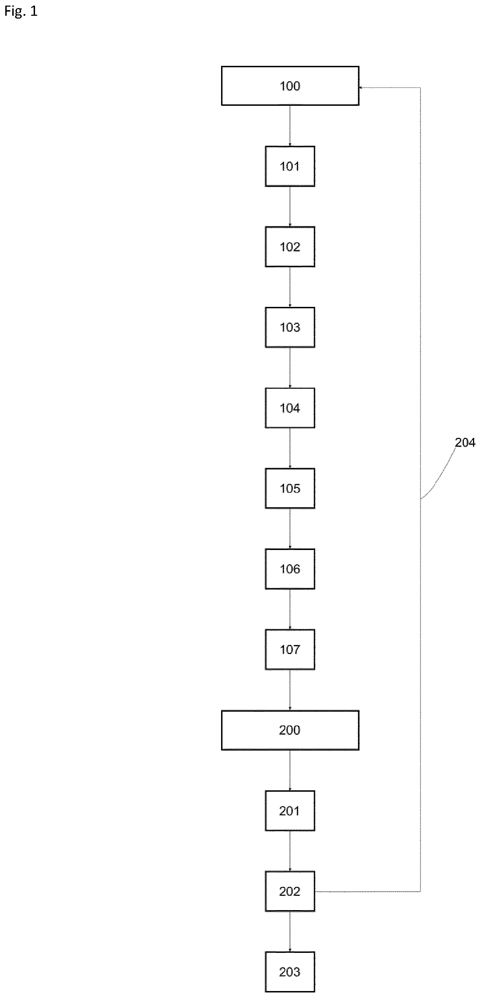

La figure 1 illustre, selon un mode de réalisation, les différentes étapes de ce procédé.

Ce procédé comprend avantageusement au moins deux phases, une phase dite de calibration 100 et une phase dite de vérification 200. La phase de calibration 100 a pour objectif l'ajustement et la détermination de paramètres de fonctionnement de sorte que la température estimée par un bolomètre 12 soit cohérente avec la température de la scène observée.

En particulier, cette phase de calibration 100 permet l'ajustement et l'enregistrement des valeurs de tension de polarisation à appliquer à chaque bolomètre 12 pour que chaque signal analogique brut se trouve dans la gamme médiane de la plage dynamique du convertisseur.

On entend ici par gamme médiane, une gamme comprenant le milieu de la plage dynamique sur une étendue de plus ou moins 20%, et de préférence étant centrée sur le milieu de la plage dynamique.

Ce positionnement sensiblement au milieu de la plage dynamique permet de réduire, voire d'éviter, les problèmes de saturation en bord de plage.

De même, avantageusement, cette phase de calibration 100 permet de déterminer et d'enregistrer la tension électrique de correction de chaque bolomètre 12, cette tension électrique de correction est une tension continue, fonction de la température de la scène observée ; cette tension électrique de correction, également appelée « Offset » en anglais, est répartie de manière aléatoire sur la matrice 11 de bolomètres 12 et se trouve être superposée à chaque signal analogique brut de chaque bolomètre 12. Cette tension électrique de correction applique donc un décalage en tension au signal analogique brut qu'il convient d'évaluer afin de le prendre en compte pour corriger le signal analogique brut. Cette correction est destinée à considérer cet offset dans le traitement des signaux analogiques bruts.

Avantageusement, une fois la phase de calibration 100 réalisée, on réalise la phase de vérification 200. Cette phase de vérification 200 a pour objectif de contrôler, de vérifier que la température évaluée par chaque bolomètre 12 est en accord avec la température de l'enceinte climatique 20, et donc avec la température de la scène observée.

Ce procédé est avantageusement réalisé une fois que le dispositif optoélectronique 10 est disposé face à un corps noir 40 dans une enceinte climatique 20 à une température T0, de préférence correspondant à la température ambiante, par exemple 20°C. Cette enceinte climatique 20 est configurée de sorte à ce que la température dans l'enceinte climatique 20 soit homogène, stable et pilotable. Le principe repose sur le principe de faire varier la température dans l'enceinte climatique 20 et ajuster puis enregistrer le comportement des bolomètres 12 de sorte à pouvoir corréler leur réponse optoélectronique à la température de la scène observée générée par le corps noir 40.

Selon un mode de réalisation, la phase de calibration 100 comprend au moins la pluralité d'étapes successives suivantes :
a. Modifier 101 la température à l'intérieur de l'enceinte climatique 20 pour atteindre une première température T1 différente de T0, de préférence inférieure à T0, avantageusement T1 = -30°C ;
b. Attendre 102 un temps de stabilisation Tps_stab que la température de la matrice 11 de bolomètres 12 soit constante, de préférence, mais non limitativement, soit égale à T1 ; on notera que, selon un mode de réalisation, la lecture de la matrice 11 de bolomètre 12 peut générer de la chaleur ; la température de la matrice 11 s'équilibre alors à une température sensiblement supérieure à T1 ; de manière avantageuse, mais non limitative, Tps_stab est inférieure à 2 heures, de préférence à 1 heure à et avantageusement à 30 minutes; on notera que Tps_stab est dépendant de la taille du dispositif optoélectronique et de sa construction mécanique.
c. Ajuster 103 la tension de polarisation de chaque bolomètre 12 de sorte que la valeur de chaque signal analogique brut se trouve dans une gamme de la plage dynamique prédéterminée du convertisseur ;Selon un mode de réalisation, la gamme est une gamme médiane, comprenant le milieu de la plage dynamique, de préférence centrée sur le milieu de la plage dynamique, avantageusement avec une extension inférieure à 20% de part et d'autre du centre de la plage dynamique ;Cela permet de conserver la pleine dynamique de chaque bolomètre 12 afin de de réduire, voire de ne pas souffrir de saturation, et cela aussi bien pour des températures basses que hautes ;Selon un mode de réalisation, la gamme est une gamme comprenant 25% de la plage dynamique, de préférence centrée sur les 25% de la plage dynamique, avantageusement avec une extension inférieure à 20% de part et d'autre des 25% de la plage dynamique ;Cela permet de conserver la pleine dynamique de chaque bolomètre 12 dans la direction des hautes températures pour des applications dans lesquelles les températures observées sont relativement élevées ;Selon un mode de réalisation, la gamme est une gamme comprenant 75% de la plage dynamique, de préférence centrée sur les 75% de la plage dynamique, avantageusement avec une extension inférieure à 20% de part et d'autre des 75% de la plage dynamique ;Cela permet de conserver la pleine dynamique de chaque bolomètre 12 dans la direction des basses températures pour des applications dans lesquelles les températures observées sont relativement basses ;Cet ajustement des tensions de polarisation permet de configurer le dispositif optoélectronique pour ses applications futures en privilégiant une dynamique homogène, ou accentuée sur les hautes ou basses températures ;
d. Enregistrer 104 la tension de polarisation ajustée de chaque bolomètre 12 ; cela permet de conserver en mémoire la tension de polarisation nécessaire pour que les signaux analogiques bruts soient dans la gamme sélectionnée de la plage dynamique ;
e. De préférence, acquérir une pluralité d'images thermiques de sorte à pouvoir réaliser un moyennage de ces images thermiques ;
f. De préférence, déterminer, pour chaque bolomètre 12, la valeur de tension électrique dite de correction ;
g. Enregistrer 105, pour chaque bolomètre, de la valeur de tension électrique de correction lui correspondant ; selon un mode de réalisation, au moins l'une parmi les étapes f et g peut être effectuée avant ou en même temps qu'au moins l'une des étapes c et d.
h. Modifier la température à l'intérieur de l'enceinte climatique pour atteindre une deuxième température T2 différente de T0 et de T1, de préférence supérieure à T1 ;
i. Répéter les étapes b à h de la phase de calibration jusqu'à une température finale Tf supérieure à la température initiale T0.

Une fois cette phase de calibration terminée, l'enceinte climatique 20 se trouve à une température Tf, par exemple à 50°C. Lors de cette phase de calibration 100, les tensions de polarisation et les valeurs de tension électrique de correction pour chaque température ayant eu un palier thermique et pour chaque bolomètre ont été enregistrées.

Une fois ces données acquises, le procédé se poursuit avec la phase de vérification 200. Cette phase de vérification 200 consiste à redescendre en température depuis Tf à T1 et à mesurer, de préférence en continu, un ou plusieurs paramètres de fonctionnement du dispositif optoélectronique 10. En particulier, la phase de vérification comprend au moins les étapes successives suivantes :
a. Descendre 201 linéairement la température à l'intérieur de l'enceinte climatique 20 depuis Tf jusqu'à ce que la température de la matrice de bolomètres soit égale à T1 ;
b. Mesurer 202 au moins un critère de fonctionnement du dispositif optoélectronique 10, pendant l'étape 201 de descente linéaire de la température de Tf à T1, en utilisant les valeurs de tension de polarisation et les valeurs d'offset enregistrées en fonction de la température de la matrice 11 de bolomètres ;
c. Si la phase de vérification répond aux critères d'évaluation, alors le procédé de calibration se termine 203, autrement la phase de calibration 100 reprend 204.

Cette phase de vérification 200 permet ainsi de contrôler que les paramètres enregistrés lors de la phase de calibration 100 sont corrects et permettent le bon fonctionnement du dispositif optoélectronique 10, c'est-à-dire l'évaluation correcte de la température de la scène observée.

Lors de la phase de vérification 200, et selon un mode de réalisation, une évaluation du bruit spatial fixe est effectuée. En particulier, cette étape cherche à détecter la présence ou non de bruit spatial fixe. De manière préférée, un bruit spatial fixe minimum, voire inexistant, est souhaité. Le bruit spatial fixe ou FPN en anglais pour Fixed Pattern Noise implique le fait que tous les composants de la matrice ne sont pas exactement identiques. Par conséquent il peut y avoir des différences entre les bolomètres 12, et donc entre les pixels, chaque bolomètre 12 représentant un pixel. Cette étape est donc destinée à évaluer le niveau de ce bruit spatial fixe afin d'estimer si les ajustements et les corrections réalisées entraînent une réduction, voire une annulation, du bruit spatial fixe.

Lors de la phase de vérification 200, et selon un mode de réalisation, une évaluation de la valeur moyenne de l'image est réalisée. Cette étape comprend l'acquisition d'une pluralité d'images, de préférence d'un nombre prédéterminé d'images, puis un moyennage de ces images est réalisé puis la température moyenne estimée par le dispositif optoélectronique 10 est comparée à la température de l'enceinte climatique 20. S'il y a correspondance, ou s'il y a un écart inférieur à une valeur seuil, le test est considéré comme un succès, autrement, il peut être nécessaire de procéder à une nouvelle phase de calibration 100.

Dans le cas où la phase de vérification 200 n'est pas concluante ou qu'il s'avère que les paramètres d'ajustement et de correction ne sont pas corrects, le procédé de calibration se poursuit en recommençant la phase de calibration 100 suivie d'une autre phase de vérification 200, et cela jusqu'à obtention d'une calibration estimée correcte.

Selon un mode de réalisation, ce procédé de calibration peut également comprendre une phase additionnelle comprenant une série d'étapes successives dans lesquelles le dispositif optoélectronique 10 n'est plus dans l'enceinte climatique 20, mais est disposé sur un banc d'essai face à un corps noir 40 dont la température est contrôlée. Cette série d'étapes successives comprend :
a. Acquisition d'une première image lorsqu'un corps noir 40 présente une température T3 inférieure à T0 ;
b. Acquisition d'une deuxième image lorsqu'un corps noir 40 présente une température T4 supérieure à T0.
c. Détection des bolomètres 12 présentant une erreur de mesure.

Avantageusement, les signaux analogiques bruts de ces bolomètres 12 seront corrigés en temps réel lors de l'utilisation du dispositif optoélectronique 10 en fonction des bolomètres 12 environnants.

De manière avantageuse, l'acquisition de la première image et l'acquisition de la deuxième image permettent de calculer un gain relatif entre chaque bolomètre 12 afin que tous, de préférence presque tous, les bolomètres 12 donnent la même réponse quel que soit la température de la scène observée. Ensuite, une détection des bolomètres 12, dont la réponse est erronée ou non satisfaisante, est effectuée sur l'ensemble des tables mémorisées pour être ensuite utilisées en temps réel pour pouvoir les remplacer par des valeurs des bolomètres 12 environnants non erronés.

Ainsi, de manière astucieuse, les signaux acquis lors de l'acquisition de la première image et de la deuxième image sont utilisés pour en calculer un gain relatif entre pixels, c'est-à-dire bolomètres, afin qu'ils donnent tous la même réponse quel que soit la température de la scène observée. Puis une détection des divers pixels, dont la réponse est erronée ou non satisfaisante, est effectuée sur l'ensemble des tables mémorisées pour être ensuite utilisées en temps réel pour pouvoir les remplacer par des valeurs des pixels environnants non erronés.

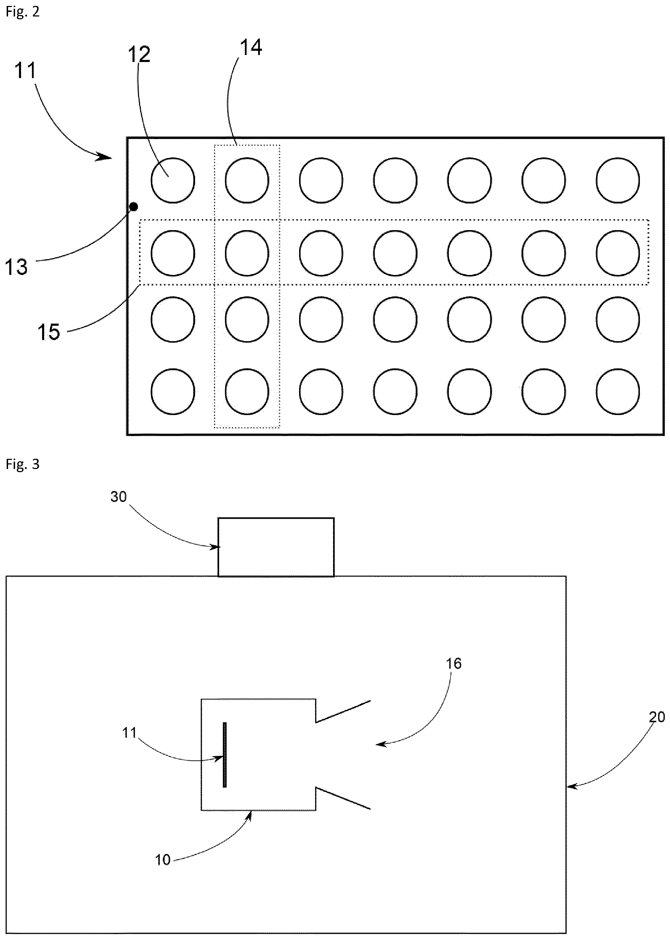

Nous allons à présent décrire, selon un mode de réalisation, la présente invention au travers des figures 2 à 5.

La figure 2 représente une matrice 11 de bolomètres 12 comprenant une pluralité de bolomètres 12 disposés en lignes 15 et en colonnes 14. Selon un mode de réalisation, la matrice 11 de bolomètre 12 peut être portée par ou peut supporter le circuit de lecture 13.

La figure 3 représente un schéma d'une installation configurée pour mettre en œuvre le procédé selon un mode de réalisation de la présente invention.

Sur cette figure, on remarque un dispositif optoélectronique 10 disposé dans une enceinte climatique 20. Le dispositif électronique 10 comprend une entrée optique 16. Cette entrée optique 16 est configurée pour que les radiations thermiques de la scène générée par le corps noir 40 puissent pénétrer dans le dispositif optoélectronique 10 et être captées par la matrice 11 de bolomètres 12 disposée dans le dispositif optoélectronique 10.

L'enceinte climatique 20 est pilotée en température de sorte à imposer une température à l'ensemble de l'enceinte climatique 20 et à tout ce qui s'y trouve.

Avantageusement, la température à l'intérieur de l'enceinte climatique 20 peut varier par exemple de -20°C à 60°C.

Selon un mode de réalisation, le procédé selon la présente invention est destiné à être mis en œuvre par un système informatique 30 comprenant au moins un processeur et/ou un ordinateur, et en outre une mémoire non transitoire comprenant un produit programme d'ordinateur comprenant des instructions, qui lorsqu'elles sont effectuées par au moins le processeur et/ou l'ordinateur, exécute au moins le procédé selon la présente invention.

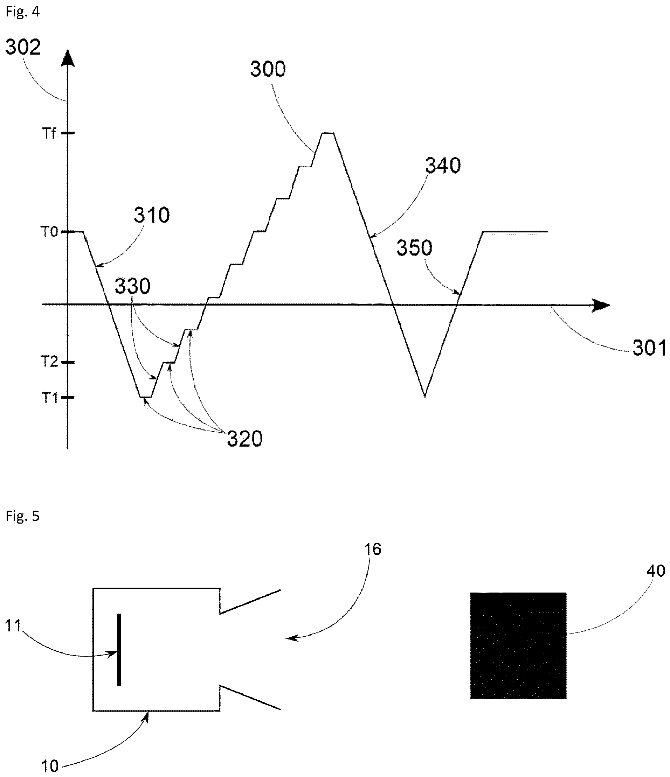

La figure 4 représente une courbe de la température 300 du dispositif optoélectronique 10 pendant la mise en œuvre du procédé selon un mode de réalisation de la présente invention.

Comme indiqué précédemment, la température de départ T0 correspond à la température ambiante. Lors de la phase de calibration 100, la première étape consiste à diminuer la température depuis T0 à T1 qui par exemple peut être égale à -10°C.Le coefficient directeur de la courbe de descente en température 310 depuis T0 à T1 est inférieur à 10°C/minute, de préférence à 5°C/minute et avantageusement à 2.5°C/minute. Le coefficient directeur de la courbe de descente en température 310 depuis T0 à T1 est configuré pour éviter un choc thermique qui pourrait entraîner soit une casse soit une condensation.

Une fois à T1, la température de l'enceinte climatique 20 tend à se stabiliser et le système informatique 30 attend un temps de stabilisation Tps_stab avant de poursuivre le procédé. De préférence, Tps_stab est compris entre 10 minutes et 180 minutes et avantageusement entre 30 minutes et 120 minutes. De préférence, ce temps de stabilisation est dépendant de la caméra 10.

Une fois que la température du dispositif optoélectronique 10 et en particulier de la matrice 11 de bolomètres 12 est stabilisée et égale à la température de la scène observée, c'est-à-dire à la température du corps noir 402 le système informatique 30 réalise un palier de température 320 et le procédé poursuit les différentes étapes suivantes :
i. Ajuster 103 la tension de polarisation de chaque bolomètre 12 ;
ii. Enregistrer 104 la tension de polarisation ajustée de chaque bolomètre 12 ;
iii. De préférence, acquérir une pluralité d'images thermiques ;
iv. De préférence, déterminer, pour chaque bolomètre 12, une valeur de tension électrique de correction :
v. Enregistrer 105, pour chaque bolomètre 12, de la valeur de tension électrique de correction lui correspondant.

Une fois cette série d'étapes réalisées, dans divers ordres selon un mode de réalisation de la présente invention par exemple, la température de l'enceinte climatique 20 change.

De préférence, la température de l'enceinte climatique évolue de T1 à T2. La température T2 est de préférence supérieure à T1. Le coefficient directeur de la montée en température 330 depuis T1 vers T2 est supérieur à 2.5°C/minute, de préférence à 5°C/minute et avantageusement à 10°C/minute. De manière avantageuse, les différents paliers de température ne sont pas grands en écart de température les uns des autres, de préférence d'environ 5°C ; ainsi, le coefficient directeur de la montée en température 330 depuis T1 vers T2 est configuré pour que la montée en température 330 depuis T1 vers T2 soit la plus rapide possible afin de laisser le maximum de temps au dispositif optoélectronique 10 pour se mettre à la température choisie, c'est-à-dire pour stabiliser sa température.

De nouveau, le système informatique 30 attend que la température de la matrice 11 de bolomètres 12 soit stabilisée et sensiblement égale à celle de l'enceinte climatique 20, c'est-à-dire à T2, T2 étant donc la température de la scène observée.

Une fois ces conditions réalisées, le procédé recommence les étapes précédentes, et cela ainsi de suite jusqu'à la température Tf dite température finale.

Ainsi, selon un mode de réalisation, la phase de calibration 100 comprend au moins 15, de préférence au moins 20, et avantageusement au moins 25 paliers de température, c'est-à-dire points de mesure des éléments de calibration.

La figure 4 illustre également la phase de vérification 200 avec la descente en température linéaire 340 depuis Tf à T1. Avantageusement, le coefficient directeur de cette descente linéaire en température 340 est inférieur à 2°C/min, de préférence à 1°C/min et avantageusement à 0.5°C/min.

Une fois arrivé à T1, si la phase de vérification 200 est concluante, la température est ramenée 350 à T0 pour que le dispositif optoélectronique 10 puisse être sorti de l'enceinte climatique 20 ; si la phase de vérification 200 n'est pas concluante, la phase de calibration 100 recommence.

La figure 5 illustre le positionnement du dispositif optoélectronique 10, par exemple sur un banc d'essai, en regard d'un corps noir 40. Ainsi, la scène observée comprend ledit corps noir 40. Ensuite, la phase additionnelle décrite précédemment peut être mise en œuvre.

La présente invention propose une solution innovante et efficace aux problèmes de dérive thermiques des dispositifs optoélectroniques destinés à évaluer la température d'une scène observée. Au lieu d'avoir recours à un calibrage régulier, et très fréquent, ou alors d'avoir recours à un contrôle de la température de la matrice de bolomètres par exemple, la présente invention propose un procédé de calibration, de préférence en usine, et avantageusement qui n'a plus lieu d'être mis en œuvre en dehors de l'usine.

Ce procédé permet de quantifier, d'enregistrer et d'ajuster les paramètres de fonctionnement de chaque bolomètre de la matrice de bolomètre en les soumettant à une pluralité de température, puis à effectuer un contrôle de cette calibration par une évaluation linéaire et non statique. La présente invention permet ainsi d'obtenir un dispositif optoélectronique calibré pour le reste de son utilisation et pouvant ainsi continuellement si besoin observer une scène sans devoir s'interrompre pour être recalibré.

L'invention n'est pas limitée aux modes de réalisations précédemment décrits et s'étend à tous les modes de réalisation couverts par les revendications.

### Liste des références

- 10: Dispositif optoélectronique
- 11: Matrice de bolomètres
- 12: Bolomètres
- 13: Circuit de lecture
- 14: Colonne de bolomètres
- 15: Ligne de bolomètres
- 16: Entrée optique
- 20: Enceinte climatique
- 30: Système informatique
- 40: Corps noir
- 100: Phase de calibration
- 101: Modification de la température de l'enceinte de T0 à T1
- 102: Attente de la stabilisation de la température
- 103: Ajustement de la tension de polarisation de chaque bolomètre
- 104: Enregistrement de la tension de polarisation ajustée de chaque bolomètre
- 105: Enregistrement d'une tension électrique de correction pour chaque bolomètre
- 106: Modification de la température de l'enceinte de T1 à T2
- 107: Répétition des étapes 112 à 116 jusqu'à la température Tf
- 200: Phase de vérification
- 201: Descente linéaire de la température depuis Tf à T0
- 202: Mesure d'au moins un critère de fonctionnement du dispositif optoélectronique pendant l'étape 211
- 203: Validation et fin du procédé de calibration
- 204: Retour à la phase de calibration
- 300: Courbe de la température
- 301: Echelle des temps
- 302: Echelle des températures
- 310: Courbe de descente en température
- 320: Palier de température
- 330: Montée en température
- 340: Descente linéaire en température
- 350: Retour à la température T0

## Revendications

1. Procédé de calibration d'un dispositif optoélectronique (10) comprenant une entrée optique (16), comprenant une calibration durant laquelle ledit dispositif optoélectronique (10) est placé dans une enceinte climatique (20) à une température ambiante T0, le dispositif optoélectronique (10) comprenant au moins une matrice (11) de bolomètres (12), de préférence de microbolomètres, configurée pour mesurer au moins une température et au moins un circuit de lecture (13) comprenant une sortie analogique apte à fournir une pluralité de signaux analogiques bruts destinée à former une image thermique, chaque signal analogique brute correspondant à un bolomètre (12) et chaque signal analogique brute étant fonction d'une scène observée par ledit dispositif optoélectronique (10), la sortie analogique du circuit de lecture (13) étant connectée à un convertisseur de signal analogique en signal numérique présentant une plage dynamique prédéterminée, la calibration dudit procédé comprenant au moins les deux phases successives suivantes durant lesquelles la scène observée est un corps noir ayant la température de l'enceinte climatique (20), :
1. Une phase de calibration (100) comprenant au moins les étapes successives suivantes :
a. Modifier (101) la température à l'intérieur de l'enceinte climatique (20) pour atteindre une première température T1 différente de T0 et inférieure à T0, par descente en température depuis T0 jusqu'à T1 ;
b. Attendre (102) un temps de stabilisation Tps_stab que la température de la matrice (11) de bolomètres (12) soit constante, de préférence soit égale à T1 ;
c. Ajuster (103) la tension de polarisation de chaque bolomètre (12) de sorte que la valeur de chaque signal analogique brut se trouve dans une gamme présélectionnée de la plage dynamique, de préférence la gamme présélectionnée correspond à la gamme médiane de la plage dynamique ;
d. Enregistrer (104) une valeur de tension de polarisation ajustée de chaque bolomètre (12) ;
e. Enregistrer (105), pour chaque bolomètre (12), une valeur de tension électrique de correction, cette tension électrique étant une tension continue et fonction de la température de la scène observée, cette tension électrique étant répartie de manière aléatoire au travers de la matrice (11) de bolomètres (12), et étant déterminée comme un décalage en tension d'une réponse en tension identique pour tous les bolomètres (12) par rapport au signal analogique brut de chaque bolomètre (12) et étant superposée audit signal analogique brut de chaque bolomètre (12) pour produire ladite réponse en tension;
f. Modifier (106) la température à l'intérieur de l'enceinte climatique (20) pour atteindre une deuxième température T2 différente de T0 et de T1, et supérieure à T1 ;
g. Répéter les étapes b, c, d, e et f de la phase de calibration (100) pour différentes deuxièmes températures T2 jusqu'à une deuxième température T2 finale égale à une température finale Tf supérieure à la température initiale T0 ;
2. Une phase de vérification (200) comprenant au moins les étapes successives suivantes :
a. Descendre (201) linéairement la température à l'intérieur de l'enceinte climatique (20) depuis Tf jusqu'à ce que la température de la matrice (11) de bolomètres (12) soit égale à T1.
b. Mesurer (202) au moins un critère de fonctionnement du dispositif optoélectronique (10) observant ladite scène, pendant l'étape de descente linéaire de la température de Tf à T1, en utilisant les valeurs de tension de polarisation et les valeurs de tension électrique de correction enregistrées en fonction de la température de la matrice (11) de bolomètres (12).

2. Procédé selon la revendication précédente dans lequel la gamme présélectionnée comprend le milieu de la plage dynamique, de préférence est centrée sur le milieu de la plage dynamique, avantageusement présente une extension inférieure à 20% de part et d'autre du centre de la plage dynamique.

3. Procédé selon la revendication 1 dans lequel la gamme présélectionnée comprend le niveau des 25% de la plage dynamique, de préférence est centrée sur le niveau des 25% de la plage dynamique, avantageusement présente une extension inférieure à 20% de part et d'autre du niveau des 25% de la plage dynamique.

4. Procédé selon la revendication 1 dans lequel la gamme présélectionnée comprend le niveau des 75% de la plage dynamique, de préférence est centrée sur le niveau des 75% de la plage dynamique, avantageusement présente une extension inférieure à 20% de part et d'autre du niveau des 75% de la plage dynamique.

5. Procédé selon l'une quelconque des revendications précédentes dans lequel, si la mesure du critère de fonctionnement indique un désaccord supérieur à une valeur seuil de la valeur de la température évaluée par la matrice (11) de bolomètres (12) relativement à la température de la scène observée, la phase de calibration (100) est exécutée de nouveau.

6. Procédé selon l'une quelconque des revendications précédentes, dans lequel l'étape consistant à modifier (101) la température est effectuée selon une courbe de descente dont le coefficient directeur est inférieur à 10°C/minute.

7. Procédé selon l'une quelconque des revendications précédentes dans lequel l'étape d'enregistrement (105) des valeurs de tension électrique de correction est effectuée après une étape de moyennage d'un nombre prédéterminé d'images thermiques à une même température.

8. Procédé selon l'une quelconque des revendications précédentes dans lequel l'évaluation du critère de fonctionnement du dispositif optoélectronique (10) comprend l'évaluation du bruit spatial fixe et/ou de la valeur thermique moyenne d'au moins une image.

9. Procédé selon l'une quelconque des revendications précédentes dans lequel la matrice (11) de bolomètres (12) présente une disposition des bolomètres en lignes (15) et en colonnes (14), et dans lequel l'acquisition par le circuit de lecture (13) des signaux analogiques bruts est réalisée ligne (15) par ligne (15).

10. Procédé selon l'une quelconque des revendications précédentes dans lequel le rapport entre le temps de stabilisation Tps_stab et le temps de modification de la température est supérieur à 1, de préférence à 5 et avantageusement à 10.

11. Procédé selon l'une quelconque des revendications précédentes dans lequel l'étape de descente linéaire en température de Tf à T1 présente un coefficient directeur inférieur ou égal à 2°C/minute, de préférence à 1°C/minute.

12. Procédé selon la revendication précédente, dans lequel l'étape de descente linéaire en température de Tf à T1 présente un coefficient directeur inférieur ou égal à 0.5°C/minute.

13. Procédé selon l'une quelconque des revendications précédentes comprenant, après la calibration, une phase additionnelle dans laquelle le dispositif optoélectronique (10) est disposé hors de l'enceinte de sorte à ce que l'entrée optique (16) soit face à un corps noir (40), la phase additionnelle comprenant au moins les étapes successives suivantes :
1. Acquisition d'une première pluralité d'images lorsque le corps noir (40) présente une température T3 inférieure à T0 ;
2. Acquisition d'une deuxième pluralité d'images lorsque le corps noir (40) présente une température T4 supérieure à T0.
3. Détermination des bolomètres (12) présentant une erreur de mesure.

14. Produit-programme d'ordinateur comprenant des instructions, qui lorsqu'elles sont effectuées par au moins un processeur, exécute au moins le procédé selon l'une quelconque des revendications précédentes, ledit processeur étant configuré pour commander une enceinte climatique (20) dans laquelle un dispositif optoélectronique (10) est disposé et pour commander ledit dispositif optoélectronique (10).

## Patentansprüche

1. Verfahren zur Kalibrierung einer einen optischen Eingang (16) umfassenden optoelektronischen Vorrichtung (10), das eine Kalibrierung umfasst, bei der die optoelektronische Vorrichtung (10) in einem Klimaschrank (20) bei einer Umgebungstemperatur T0 platziert wird, wobei die optoelektronische Vorrichtung (10) mindestens eine Matrix (11) von Bolometern (12), vorzugsweise Mikrobolometern, umfasst, die so eingerichtet ist, mindestens eine Temperatur und mindestens einen Leseschaltkreis (13) zu messen, der einen Analogausgang umfasst, der in der Lage ist, eine Vielzahl von analogen Rohsignalen bereitzustellen, die dazu bestimmt ist, ein Wärmebild zu bilden, wobei jedes analoge Rohsignal einem Bolometer (12) entspricht und jedes analoge Rohsignal eine Funktion einer von der optoelektronischen Vorrichtung (10) beobachteten Szene ist, wobei der Analogausgang des Leseschaltkreises (13) mit einem Analog-Digital-Wandler verbunden ist, der einen vorbestimmten dynamischen Bereich aufweist, wobei die Kalibrierung des Verfahrens mindestens die folgenden zwei aufeinanderfolgenden Phasen umfasst, während der die beobachtete Szene ein schwarzer Körper mit der Temperatur des Klimaschranks (20) ist:
(1) eine Kalibrierungsphase (100), die mindestens die folgenden aufeinanderfolgenden Schritte umfasst:
a. Ändern (101) der Temperatur im Inneren des Klimaschranks (20), um eine erste Temperatur T1 zu erreichen, die sich von T0 unterscheidet und niedriger als T0 ist, durch eine Temperaturabsenkung von T0 auf T1;
b. Warten (102) auf eine Stabilisierungszeit Tps_stab, bis die Temperatur der Matrix (11)von Bolometern (12) konstant ist, vorzugsweise gleich T1;
c. Anpassen der Polarisationsspannung (103) jedes Bolometers (12) derart, dass der Wert jedes analogen Rohsignals in einem vorgewählten Bereich des dynamischen Bereichs liegt, wobei der vorgewählte Bereich vorzugsweise dem mittleren Bereich des dynamischen Bereichs entspricht;
d. Speichern (104) eines angepassten Polarisationsspannungswerts jedes Bolometers (12);
e. Speichern (105) eines Werts der elektrischen Korrekturspannung für jedes Bolometer (12), wobei diese elektrische Spannung eine Gleichspannung und eine Funktion der Temperatur der beobachteten Szene ist, wobei diese elektrische Spannung zufällig über die Matrix (11) von Bolometern (12) verteilt wird und als Spannungsverschiebung einer identischen Spannungsantwort für alle Bolometer (12) im Verhältnis zum analogen Rohsignal jedes Bolometers (12) bestimmt wird und dem analogen Rohsignal jedes Bolometers (12) überlagert wird, um die Spannungsantwort zu erzeugen;
f. Ändern (106) der Temperatur im Inneren des Klimaschranks (20), um eine zweite Temperatur T2 zu erreichen, die sich von T0 und T1 unterscheidet und höher als T1 ist;
g. Wiederholen der Schritte b, c, d, e und f der Kalibrierungsphase (100) für verschiedene zweite Temperaturen T2 bis zu einer zweiten Endtemperatur T2, die gleich einer Endtemperatur Tf ist, die höher als die Anfangstemperatur T0 ist;
(2) eine Überprüfungsphase (200), die mindestens die folgenden aufeinanderfolgenden Schritte umfasst:
a. lineares Senken (201) der Temperatur im Inneren des Klimaschranks (20) von Tf, bis die Temperatur der Matrix (11) von Bolometern (12) gleich T1 ist.
b. Messen (202) mindestens eines Funktionskriteriums der optoelektronischen Vorrichtung (10), die die Szene beobachtet, während des Schritts des linearen Senkens der Temperatur von Tf auf T1 unter Verwendung der Polarisationsspannungswerte und der Werte der elektrischen Korrekturspannung, die als Funktion der Temperatur der Matrix (11) von Bolometern (12) aufgezeichnet wurden.

2. Verfahren nach dem vorhergehenden Anspruch, wobei der vorgewählte Bereich die Mitte des dynamischen Bereichs umfasst, vorzugsweise auf die Mitte des dynamischen Bereichs zentriert ist und vorteilhafterweise eine Erweiterung von weniger als 20 % auf beiden Seiten der Mitte des dynamischen Bereichs aufweist.

3. Verfahren nach Anspruch 1, wobei der vorgewählte Bereich den Pegel von 25 % des dynamischen Bereichs umfasst, vorzugsweise auf den Pegel von 25 % des dynamischen Bereichs zentriert ist und vorteilhafterweise eine Erweiterung von weniger als 20 % auf beiden Seiten des Pegels von 25 % des dynamischen Bereichs aufweist.

4. Verfahren nach Anspruch 1, wobei der vorgewählte Bereich den Pegel von 75 % des dynamischen Bereichs umfasst, vorzugsweise auf den Pegel von 75 % des dynamischen Bereichs zentriert ist und vorteilhafterweise eine Erweiterung von weniger als 20 % auf beiden Seiten des Pegels von 75 % des dynamischen Bereichs aufweist.

5. Verfahren nach einem der vorhergehenden Ansprüche, wobei, wenn die Messung des Funktionskriteriums eine Diskrepanz anzeigt, die über einem Schwellenwert des Werts der von der Matrix (11) von Bolometern (12) ausgewerteten Temperatur im Verhältnis zur Temperatur der beobachteten Szene liegt, die Kalibrierungsphase (100) erneut ausgeführt wird.

6. Verfahren nach einem der vorhergehenden Ansprüche, wobei der Schritt des Änderns (101) der Temperatur nach einer Absenkkurve durchgeführt wird, deren Leitkoeffizient kleiner als 10 °C/Minute ist.

7. Verfahren nach einem der vorhergehenden Ansprüche, wobei der Schritt des Speicherns (105) der Werte der elektrischen Korrekturspannung nach einem Schritt des Mittelns einer vorbestimmten Anzahl von Wärmebildern bei einer gleichen Temperatur durchgeführt wird.

8. Verfahren nach einem der vorhergehenden Ansprüche, wobei die Auswertung des Funktionskriteriums der optoelektronischen Vorrichtung (10) die Auswertung des festen räumlichen Rauschens und/oder des mittleren Wärmewerts von mindestens einem Bild umfasst.

9. Verfahren nach einem der vorhergehenden Ansprüche, wobei die Matrix (11) von Bolometern (12) eine Anordnung der Bolometer in Zeilen (15) und in Spalten (14) aufweist, und wobei die Erfassung der analogen Rohsignale durch den Leseschaltkreis (13) Zeile (15) für Zeile (15) erfolgt.

10. Verfahren nach einem der vorhergehenden Ansprüche, wobei das Verhältnis zwischen der Stabilisierungszeit Tps_stab und der Temperaturänderungszeit größer als 1, vorzugsweise als 5 und vorteilhafterweise als 10 ist.

11. Verfahren nach einem der vorhergehenden Ansprüche, wobei der Schritt des linearen Senkens der Temperatur von Tf auf T1 einen Leitkoeffizienten aufweist, der kleiner gleich 2 °C/Minute, vorzugsweise 1 °C/Minute, ist.

12. Verfahren nach dem vorhergehenden Anspruch, wobei der Schritt des linearen Senkens der Temperatur von Tf auf T1 einen Leitkoeffizienten aufweist, der kleiner gleich 0,5 °C/Minute ist.

13. Verfahren nach einem der vorhergehenden Ansprüche, das nach der Kalibrierung eine zusätzliche Phase umfasst, in der die optoelektronische Vorrichtung (10) außerhalb des Gehäuses derart angeordnet ist, dass der optische Eingang (16) einem schwarzen Körper (40) zugewandt ist, wobei die zusätzliche Phase mindestens die folgenden aufeinanderfolgenden Schritte umfasst:
(1) Erfassen einer ersten Vielzahl von Bildern, wenn der schwarze Körper (40) eine Temperatur T3 aufweist, die niedriger als T0 ist;
(2) Erfassen einer zweiten Vielzahl von Bildern, wenn der schwarze Körper (40) eine Temperatur T4 aufweist, die höher als T0 ist.
(3) Bestimmen der Bolometer (12), die einen Messfehler aufweisen.

14. Computerprogrammprodukt, das Anweisungen umfasst, die, wenn sie von mindestens einem Prozessor ausgeführt werden, mindestens das Verfahren nach einem der vorhergehenden Ansprüche ausführen, wobei der Prozessor so eingerichtet ist, dass er einen Klimaschrank (20) steuert, in dem eine optoelektronische Vorrichtung (10) angeordnet ist, und die optoelektronische Vorrichtung (10) steuert.

## Claims

1. Method for calibrating an optoelectronic device (10) comprising an optical input (16), comprising a calibration during which said optoelectronic device (10) is placed in a climatic enclosure (20) at an ambient temperature T0, the optoelectronic device (10) comprising at least one matrix (11) of bolometers (12), preferably microbolometers, configured to measure at least one temperature and at least one reading circuit (13) comprising an analogue output capable of providing a plurality of raw analogue signals intended to form a thermal image, each raw analogue signal corresponding to a bolometer (12) and each raw analogue signal being a function of a scene observed by said optoelectronic device (10), the analogue output of the reading circuit (13) being connected to an analogue to digital signal converter having a predetermined dynamic range, the calibration of said method comprising at least the following two successive phases during which the observed scene is a black body having the temperature of the climatic enclosure (20),:
(1) A calibration phase (100) comprising at least the following successive steps:
a. Modifying (101) the temperature inside the climatic enclosure (20) to reach a first temperature T1 different from T0 and lower than T0, by temperature drop from T0 to T1;
b. Waiting (102) for a stabilisation time Tps_stab for the temperature of the matrix (11) of bolometers (12) to be constant, preferably equal to T1;
c. Adjusting (103) the bias voltage of each bolometer (12) such that the value of each raw analogue signal is within a preselected range of the dynamic range, preferably the preselected range corresponds to the midrange of the dynamic range;
d. Recording (104) a bias voltage value adjusted of each bolometer (12);
e. Recording (105), for each bolometer (12), a correction electric voltage value, this electric voltage being a direct voltage and a function of the temperature of the observed scene, this electric voltage being randomly distributed through the matrix (11) of bolometers (12), and being determined as a voltage offset of an identical voltage response for all bolometers (12) with respect to the raw analogue signal of each bolometer (12) and being superimposed on said raw analogue signal of each bolometer (12) to produce said voltage response;
f. Modifying (106) the temperature inside the climatic enclosure (20) to reach a second temperature T2 different from T0 and T1, and greater than T1;
g. Repeating steps b, c, d, e and f of the calibration phase (100) for different second temperatures T2 up to a second, final temperature T2 equal to a final temperature Tf greater than the initial temperature T0;
(2) A verification phase (200) comprising at least the following successive steps:
a. Linearly dropping (201) the temperature inside the climatic enclosure (20) from Tf until the temperature of the matrix (11) of bolometers (12) is equal to T1.
b. Measuring (202) at least one operating criterion of the optoelectronic device (10) observing said scene, during the step of linearly dropping temperature from Tf to T1, using the bias voltage values and the correction electric voltage values recorded as a function of the temperature of the matrix (11) of bolometers (12).

2. The method according to the preceding claim, wherein the preselected range comprises the middle of the dynamic range, preferably is centred on the middle of the dynamic range, advantageously has an extension of less than 20% on either side of the centre of the dynamic range.

3. The method according to claim 1, wherein the preselected range comprises the 25% level of the dynamic range, preferably is centred on the 25% level of the dynamic range, advantageously has an extension of less than 20% on either side of the 25% level of the dynamic range.

4. The method according to claim 1, wherein the preselected range comprises the 75% level of the dynamic range, preferably is centred on the 75% level of the dynamic range, advantageously has an extension of less than 20% on either side of the 75% level of the dynamic range.

5. The method according to any of the preceding claims, wherein, if the measurement of the operating criterion indicates a mismatch greater than a threshold value of the temperature value evaluated by the matrix (11) of bolometers (12) relative to the temperature of the observed scene, the calibration phase (100) is executed again.

6. The method according to any of the preceding claims, wherein the step of modifying (101) the temperature is carried out according to a drop curve whose slope is less than 10°C/minute.

7. The method according to any of the preceding claims, wherein the step of recording (105) the correction electric voltage values is performed after a step of averaging a predetermined number of thermal images at a same temperature.

8. The method according to any of the preceding claims, wherein the evaluation of the operating criterion of the optoelectronic device (10) comprises the evaluation of the fixed spatial noise and/or the average thermal value of at least one image.

9. The method according to any of the preceding claims, wherein the matrix (11) of bolometers (12) has an arrangement of the bolometers in rows (15) and in columns (14), and wherein the acquisition by the reading circuit (13) of the raw analogue signals is performed row (15) by row (15).

10. The method according to any of the preceding claims, wherein the ratio between the stabilisation time Tps_stab and the temperature change time is greater than 1, preferably than 5, and advantageously than 10.

11. The method according to any of the preceding claims, wherein the step of linearly dropping temperature from Tf to T1 has a slope less than or equal to 2°C/minute, preferably 1°C/minute.

12. The method according to the preceding claim, wherein the step of linearly dropping temperature from Tf to T1 has a slope less than or equal to 0.5°C/minute.

13. The method according to any of the preceding claims comprising, after calibration, an additional phase in which the optoelectronic device (10) is disposed outside the enclosure so that the optical input (16) is facing a black body (40), the additional phase comprising at least the following successive steps:
(1) Acquiring a first plurality of images when the black body (40) has a temperature T3 lower than T0;
(2) Acquiring a second plurality of images when the black body (40) has a temperature T4 greater than T0.
(3) Determining bolometers (12) with measurement error.

14. A computer program product comprising instructions, which when performed by at least one processor, execute at least the method according to any of the preceding claims, said processor being configured to control a climatic enclosure (20) in which an optoelectronic device (10) is disposed and to control said optoelectronic device (10).
